# EUROPÄISCHE PATENTSCHRIFT

(11) **EP 1 862 361 B1**
(45) Veröffentlichungstag und Bekanntmachung des Hinweises auf die Patenterteilung: **13.06.2012**
(21) Anmeldenummer: 07105618.8
(22) Anmeldetag: 04.04.2007
(51) Int. Cl.: B60S 1/04

(54) **An einem Träger festgelegte Wischermotor-Getriebe-Einheit sowie Verfahren zur Festlegung**
Wipermotor-unit mounted on a support and mounting method
Unité de moteur d'essuie-glace monté sur un support et méthode de montage

(30) Priorität: 31.05.2006 DE 102006025331
(43) Veröffentlichungstag der Anmeldung: 05.12.2007
(73) Patentinhaber: ROBERT BOSCH GMBH, 70442 Stuttgart (DE)
(72) Erfinder: Hawighorst, Achim, 77830 Buehlertal (DE)

(56) Entgegenhaltungen:
- DE-A1- 19 712 113
- DE-A1- 19 860 264
- DE-A1-102004 005 731
- FR-A- 2 783 477
- JP-A- 2001 294 126

## Beschreibung

### Stand der Technik

Die Erfindung betrifft eine Wischeranlage, insbesondere für Kraftfahrzeuge, gemäß dem Oberbegriff des Anspruchs 1.

Bekannte Wischeranlagen sind fest mit der Karosserie des Kraftfahrzeugs verbunden. Die Wischeranlagen bestehen im Wesentlichen aus einem Wischerantrieb, welcher über eine Antriebswelle und ein Gestänge Abtriebswellen antreibt, die in Wischerlager gelagert sind, die aus der Karosserie des Fahrzeugs ragen und an denen Wischer befestigt sind.

Der Wischerantrieb weist einen Wischermotor und ein Getriebe auf, aus dem eine Antriebswelle herausragt. Der Wischerantrieb muss sowohl in axialer als auch in Umfangsrichtung an einem Träger fixiert werden, damit die Reaktionskräfte des zu übertragenden Drehmoments sowie die Gewichtskräfte aufgenommen werden können.

Aus der DE 198 55 471 A1 ist eine Wischeranlage bekannt, bei der das Getriebegehäuse mit dem Träger verschraubt ist. Nachteilig hierbei ist die große Bauhöhe aufgrund der axialen Ausdehnung der Schraubenköpfe der verwendeten Befestigungsschrauben. Auch ist das Montageverfahren aufgrund des notwendigen Verschraubungsschrittes zeitaufwändig.

Aus der DE 197 12 113 A1 ist ebenfalls eine Wischeranlage bekannt. Bei der bekannten Wischeranlage ist das Gehäuse mittels den Träger umgreifenden Montageblechen an dem Träger fixiert. Die Montagebleche sind mit dem Getriebegehäuse verschraubt. Nachteilig hierbei ist die Verwendung von teuren Montageblechen sowie die zeitaufwändige Montage aufgrund des notwendigen Verschraubungsschrittes.

Die DE 198 60 264 A1 zeigt eine Wischeranlage für Kraftfahrzeuge. Die Fixierung des Getriebegehäuses an den Träger erfolgt über zwei in Richtung von dem Träger weg federnde, elastische Halbschalen, auf die ein starres Montageblech aufgeschoben wird, wodurch die Halbschalen in Richtung des Trägers verstellt werden und diesen zwischen sich klemmend aufnehmen. Die Montage ist mühsam, da die elastischen Halbschalen exakt in entsprechende Fixieraufnahmen des starren Montageblechs eingefädelt werden müssen, um ein Aufschieben des Montageblechs zu ermöglichen. Der Zeitaufwand bei der Montage erhöht sich, wenn sich das Montageblech beim Aufschiebevorgang verkeilt.

Aus der JP 2001-294126 A ist es bekannt, einen rohrförmigen Träger in axialer Richtung auf einen kreuzförmigen Befestigungsvorsatz der Wischermotor-Getriebe-Einheit aufzuschieben und in einem zweiten Schritt mit dem Befestigungsfortsatz vollumfänglich zu vercrimpen. Die Crimpverbindung verhindert eine Bewegung der Wischermotor-Getriebe-Einheit relativ zu dem Träger in Umfangsrichtung. Um eine ausreichend stabile Anbindung der Wischer-Einheit an einer Fahrzeugkarosserie zu gewährleisten, müssen zwei Trägerrohre vorgesehen sein, die an gegenüberliegenden Seiten auf Befestigungsfortsätze der Wischermotor-Getriebe-Einheit aufgeschoben werden. Die Wischermotor-Getriebe-Einheit wird so zwischen den zwei Trägern aufgenommen und verbindet diese miteinander. Durch die Anordnung der Wischermotor-Getriebe-Einheit axial zwischen zwei gegenüberliegenden Trägerrohren wird ein axiales Verschieben der Wischermotor-Getriebe-Einheit unterbunden. Nachteilig bei der bekannten Wischeranlage ist es, dass zwei Vercrimpungsschritte notwendig sind, um die Wischermotor-Getriebe-Einheit mit den Trägern zu verbinden. Ferner ist von Nachteil, dass zwei einzelne Trägerrohre verwendet werden müssen, um die Wischermotor-Getriebe-Einheit an zwei beabstandeten Stellen mit der Fahrzeugkarosserie zu verbinden. Nachteilig ist weiterhin, dass die Trägerrohre in axialer Richtung auf den Befestigungsfortsatz aufgefädelt werden müssen. Dies ist insbesondere deshalb schwierig, da der Außendurchmesser der Befestigungsfortsätze in etwa dem Innendurchmesser des Trägerrohres entspricht.

Weiterhin ist aus der FR-A-2783477 eine Wischanlage mit den Merkmalen des Oberbegriffs des Anspruchs 1 bekannt.

### Offenbarung der Erfindung

### Technische Aufgabe

Der Erfindung liegt die Aufgabe zugrunde, eine Wischeranlage sowie ein Montageverfahren für eine Wischeranlage vorzuschlagen, bei denen eine Wischermotor-Getriebe-Einheit mit einfachen Mitteln in kurzer Zeit an einem zugehörigen Träger fixierbar ist.

### Technische Lösung

Diese Aufgabe wird mit einer Wischeranlage mit den Merkmalen des Anspruchs 1 sowie mit einem Montageverfahren mit den Merkmalen des Anspruchs 8 gelöst. Vorteilhafte Weiterbildungen der Erfindung sind in den Unteransprüchen angegeben.

Der Erfindung liegt der Gedanke zugrunde, den Träger mit seiner Öffnung nicht in axialer Richtung auf den Befestigungsfortsatz der Wischermotor-Getriebe-Einheit aufzuschieben, sondern in radialer Richtung. Der Träger umgreift den Befestigungsfortsatz erfindungsgemäß vom Träger aus gesehen in seitlicher Richtung und wird zu beiden Seiten des Befestigungsfortsatzes, also axial bzw. in Längsrichtung - nicht notwendigerweise gerade - weitergeführt. Anders ausgedrückt endet der Träger nicht mit seinem freien Ende an der Wischermotor-Getriebe-Einheit sondern wird an der Wischermotor-Getriebe-Einheit vorbeigeführt. Die Wischermotor-Getriebe-Einheit ist seitlich an dem Träger gehalten. Hierdurch ist es möglich, auf einen zusätzlichen Träger und die Anordnung der Wischermotor-Getriebe-Einheit zwischen zwei Trägern zu verzichten. Es ist nur ein einziger Vercrimpungsprozess notwendig, wodurch eine schnelle Montage der Wischeranlage gewährleistet ist. Ferner kann der Befestigungsfortsatz verbessert umgriffen werden, ein zeitaufwändiger Einfädelprozess wie im Stand der Technik ist nicht notwendig. Der an der Wischermotor-Getriebe-Einheit vorbei geführte und diese haltende Träger ist mit seinen beiden gegenüberliegenden Enden fest mit der Karosserie verbunden und gewährleistet somit eine sichere, haltbare und stabile Verbindung zwischen Wischermotor-Getriebe-Einheit und Fahrzeugkarosserie.

In Ausgestaltung der Erfindung ist mit Vorteil vorgesehen, dass der Träger, zumindest im Vercrimpungsbereich, also in dem Bereich mit dem der Träger den Befestigungsfortsatz seitlich umgreift, im Querschnitt zumindest näherungsweise U-förmig oder V-förmig mit zwei gegenüberliegenden Schenkeln ausgeformt ist. Wesentlich ist, dass zumindest im Vercrimpungsbereich zwei gegenüberliegende Schenkel vorgesehen sind, mit denen der Träger den Befestigungsfortsatz umgreifen kann. Durch diese vorteilhafte Ausbildung des Trägers kann auf zusätzliche Montagebleche zur Festlegung des Befestigungsfortsatzes am Träger verzichtet werden.

Gemäß einer zweckmäßigen Weiterbildung der Erfindung wird die U-Form oder die V-Form des Trägers, also das Vorsehen von mindestens zwei gegenüberliegenden Schenkeln, durch plastisches Verformen des Trägers in einem Verfahrensschritt erreicht. Durch diese Maßnahme kann auf herkömmliche, vorzugsweise rohrförmige Träger, insbesondere mit kreisrundem Querschnitt, zurückgegriffen werden. Der Träger wird bevorzugt in einem Biegeschritt vor dessen Festlegung an der Wischermotor-Getriebe-Einheit verformt. Bevorzugt ergibt sich hierdurch eine wannenförmige Ausbildung im Vercrimpungsbereich. Bevorzugt ist der Träger außerhalb des Vercrimpungsbereichs nicht oder in üblicher Weise verformt, wodurch auf herkömmliche Befestigungsmittel zur Festlegung des Trägers an der Fahrzeugkarosserie zurückgegriffen werden kann.

Bevorzugt weist der Träger im Vercrimpungsbereich zwei unmittelbar aneinander anliegende Wände auf. Dies wird im einfachsten Fall dadurch realisiert, dass ein Träger mit einem Hohlprofil zumindest im Vercrimpungsbereich plastisch verformt wird, wodurch die das Hohlprofil bildenden Wände aneinander anliegen und somit einen verstärkten Vercrimpungs- bzw. Befestigungsbereich bilden.

Es ist denkbar, den Befestigungsfortsatz derart auszubilden, dass alleine durch den Vercrimpungsschritt eine Sicherung der Wischermotor-Getriebe-Einheit in alle Raumrichtungen sowie in Umfangsrichtung erfolgt. Um insbesondere eine Verschiebung der Wischermotor-Getriebe-Einheit in axialer Richtung entlang des Trägers sicher zu verhindern, ist in Ausgestaltung der Erfindung vorgesehen, dass ein Teil der Wischermotor-Getriebe-Einheit, insbesondere ein Befestigungsdom, den Träger bevorzugt in seitlicher, d.h. radialer Richtung durchsetzt. Hierzu ist der Befestigungsdom durch eine Öffnung im Träger hindurchgeführt, wobei die Mittelachse der Öffnung mit der Längsachse des Trägers einen Winkel, bevorzugt 90°, einschließt. Fertigungstechnisch von Vorteil ist es den Befestigungsdom einteilig mit dem Befestigungsfortsatz auszubilden.

Zusätzlich oder alternativ kann vorgesehen werden, einen oder bevorzugt mindestens zwei Befestigungsdome vorzusehen, die seitlich und mit Abstand zueinander an den Träger anliegen und somit ein Verdrehen des Trägers relativ zu der Wischermotor-Getriebe-Einheit verhindern.

Gemäß dem erfindungsgemäßen Montageverfahren zur Befestigung einer Wischermotor-Getriebe-Einheit einer Wischeranlage an einem, insbesondere rohrförmigen, Träger ist vorgesehen, dass der Träger in seitlicher, d.h. radialer Richtung auf einen Befestigungsfortsatz der Wischermotor-Getriebe-Einheit aufgeschoben und in einem weiteren Montageschritt mit dem Befestigungsfortsatz vercrimpt wird. Die Montagezeit kann durch Anwendung des erfindungsgemäßen Montageverfahrens wesentlich verkürzt werden. Insbesondere ist es möglich, auf nur einen einzigen Träger zurückzugreifen, da die Wischermotor-Getriebe-Einheit erfindungsgemäß nicht zwischen zwei Trägern sondern seitlich an zumindest einem Träger festgelegt ist. Bevorzugt ist dieser einzige Träger an zwei gegenüberliegenden Stellen an die Fahrzeugkarosserie angebunden.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:

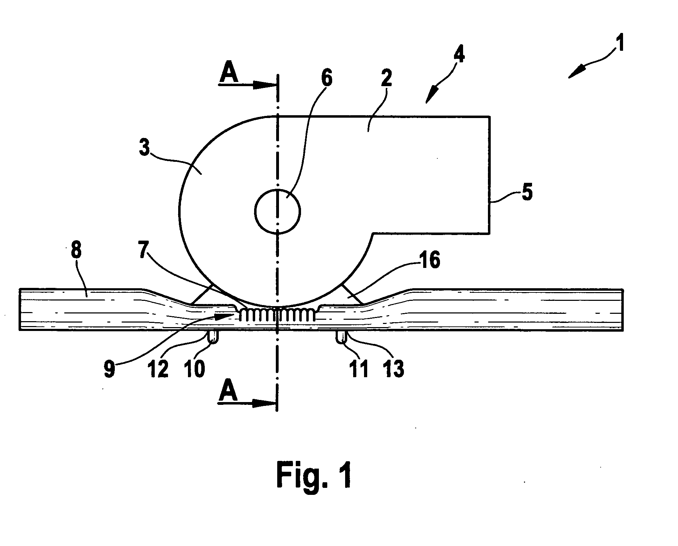

- Fig. 1: eine schematische Darstellung einer Wischeranlage mit einer an einem Träger festgelegten Wischermotor- Getriebe-Einheit,
- Fig. 2a: eine schematische Schnittdarstellung entlang der Schnittlinie A-A gemäß Fig. 1, wobei die Wischermotor-Getriebe-Einheit noch nicht an dem Träger festgelegt ist,
- Fig. 2b: eine schematische Schnittdarstellung entlang der Schnittlinie A-A gemäß Fig. 1, wobei der Träger seitlich mit der Wischermotor-Getriebe-Einheit vercrimpt ist,
- Fig. 3a: eine abgewandelte Darstellung der Fig. 2a mit einem im Querschnitt eckigen Trägerprofil und
- Fig. 3b: eine abgewandelte Darstellung von Fig. 2b mit eckigem Trägerprofil.

### Ausführungsformen der Erfindung

In den Figuren sind gleiche Bauteile und Bauteile mit gleicher Funktion mit den gleichen Bezugszeichen bezeichnet.

In den Figuren ist eine Wischeranlage 1 mit einem Wischermotor 2 und einem Getriebe 3 dargestellt. Wischermotor 2 und Getriebe 3 bilden zusammen eine Wischermotor-Getriebe-Einheit 4 mit einem Gehäuse 5. Im gezeigten Ausführungsbeispiel handelt es sich um ein gemeinsames Gehäuse 5. Es ist auch denkbar den Wischermotor 2 und das Getriebe 3 in separaten Gehäusen anzuordnen. Aus dem Gehäuse 5 ragt eine Antriebswelle 6 heraus, mit der ein nicht dargestelltes Wischergestänge reversierend angetrieben wird. An das Gehäuse 5 ist ein länglicher Befestigungsfortsatz 7 angeformt. Der Befestigungsfortsatz 7 wird von der Außenfläche eines rohrförmigen Trägers 8 in einem Vercrimpungsbereich 9 des Trägers 8 seitlich umgriffen. Dabei ist der Vercrimpungsbereich 9 des Trägers 8 mit dem sich in Längsrichtung des Trägers 8 erstreckenden Befestigungsfortsatz 7 vercrimpt. Die Vercrimpung verhindert ein Abziehen der Wischermotor-Getriebe-Einheit 4 von dem Träger 8 in radialer Richtung sowie ein Verdrehen der Wischermotor-Getriebe-Einheit 4 relativ zu dem Träger 8. Zur Sicherung der Wischermotor-Getriebe-Einheit 4 gegen axiales Verschieben sind zwei beabstandete Befestigungsdome 10, 11 vorgesehen, die zwei in axialer Richtung beabstandete Öffnungen 12, 13 des Trägers 8 in radialer Richtung durchsetzen.

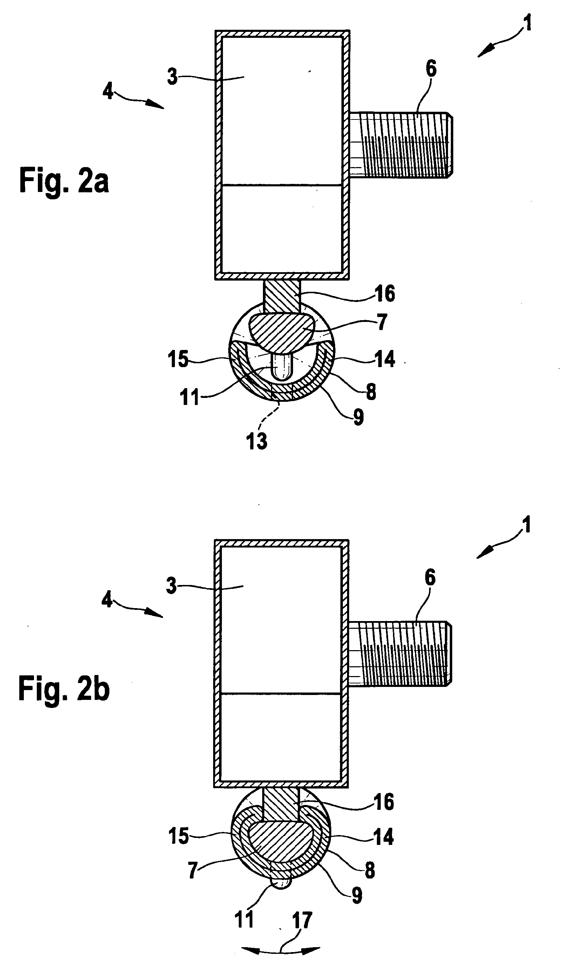

Aus der Schnittdarstellung gemäß den Fig. 2a und 2b ist ersichtlich, dass der Träger 8 im Vercrimpungsbereich 9 plastisch verformt ist. Der auch in diesem Bereich ursprünglich kreisförmige Querschnitt des Trägers wurde zu einer runden U-Form verformt, so dass eine Befestigungswanne mit zwei gegenüberliegenden, sich in radialer Richtung erstreckenden Schenkeln 14, 15 gebildet ist. Wie aus Fig. 2b ersichtlich ist, umgreifen die beiden Schenkel 14, 15 des Vercrimpungsbereichs 9 des Trägers 8 den Befestigungsfortsatz 7. Durch den Vercrimpungsprozess hintergreifen die freien Enden der Schenkel 14, 15 den Befestigungsfortsatz 7 so dass ein Abziehen des Trägers 8 von der Wischermotor-Getriebe-Einheit 4 nicht mehr möglich ist. Die freien Enden der Schenkel 14, 15 liegen an einem seitlich vorstehenden Abschnitt 16 des Befestigungsfortsatzes an, wodurch auch ein Verdrehen der Wischermotor-Getriebe-Einheit 4 in Pfeilrichtungen 17 relativ zu dem Träger 8 verhindert wird. Eine Verschiebung in axialer Richtung wird durch die den Träger 8 durchsetzenden Befestigungsdome 10, 11 sicher verhindert.

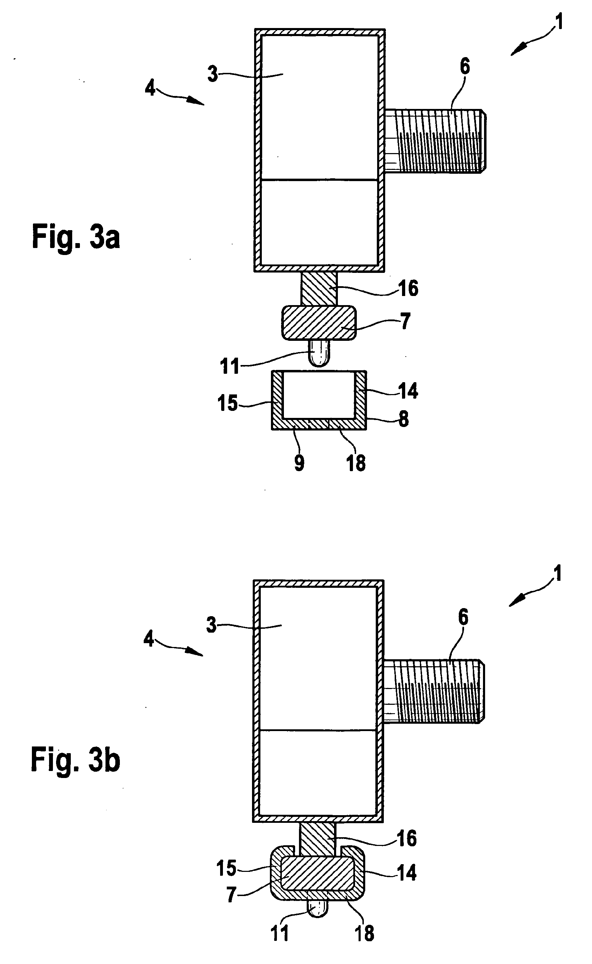

Die Darstellungen der Wischeranlage 1 gemäß den Fig. 3a und 3b entsprechen im Wesentlichen den Darstellungen gemäß Fig. 2a und 2b. Im Unterschied zu der Ausführungsform gemäß Fig. 2a und Fig. 2b handelt es sich bei dem Hohlprofil-Träger 8 um ein Rechteckrohr und nicht um ein Rundrohr und der Querschnitt des Trägers 8 im Vercrimpungsbereich ist als eckiges U mit zwei gegenüberliegenden Schenkeln 14, 15 und einem diese verbindenden Bodenschenkel 18 ausgebildet. Der Träger 8 gemäß den Fig. 3a und 3b hat in den an der Wischermotor-Getriebe-Einheit 4 vorbei geführten Bereichen einen rechteckigen Querschnitt. Die Form des Befestigungsfortsatzes 7 ist dem eckigen Querschnittsprofil des Trägers 8 im Vercrimpungsbereich 9 angepasst und ebenfalls mit einem rechteckigen Abschnitt versehen. Dieser ist, wie in Fig. 3b gezeigt, von den Schenkeln 14, 15, 18 umgriffen, wobei die freien Enden der Schenkel 14, 15 den im Querschnitt rechteckigen Abschnitt des Befestigungsfortsatzes 7 hintergreifen. Auch bei dem Ausführungsbeispiel gemäß den Fig. 3a und 3b ist der Träger 8 zur Verhinderung einer Axialverschiebung über Befestigungsdome 10, 11 an der Wischermotor-Getriebe-Einheit 4 gesichert. Bei entsprechender Ausformung des Befestigungsfortsatzes kann auf ein Durchsetzen des Trägers 8 mit einem Befestigungsdom 10, 11 verzichtet werden.

## Patentansprüche

1. Wischeranlage mit einer an einem, insbesondere rohrförmigen, Träger (8) gehaltenen Wischermotor-Getriebe-Einheit (4), wobei der Träger (8) mit mindestens einem Befestigungsfortsatz (7) der Wischermotor-Getriebe-Einheit (4) in einem Vercrimpungsbereich (9) vercrimpt ist,
**dadurch gekennzeichnet,**
**dass** der Träger (8) den Befestigungsfortsatz (7) seitlich umgreift und zu beiden Seiten des Befestigungsfortsatzes (7) in Längsrichtung weitergeführt ist.

2. Wischeranlage nach Anspruch 1,
**dadurch gekennzeichnet,**
**dass** der Träger (8), zumindest im Vercrimpungsbereich (9), im Querschnitt zumindest näherungsweise U-förmig oder V-förmig mit zwei gegenüberliegenden Schenkeln (14, 15) ausgeformt ist.

3. Wischeranlage nach Anspruch 2,
**dadurch gekennzeichnet,**
**dass** die U-Form oder die V-Form des Trägers (8) durch plastisches Verformen des Trägers (8) hergestellt ist.

4. Wischeranlage nach Anspruch 3,
**dadurch gekennzeichnet,**
**dass** der Träger (8) im Vercrimpungsbereich (9) zwei aneinander anliegende Wände aufweist.

5. Wischeranlage nach einem der vorhergehenden Ansprüche, **dadurch gekennzeichnet**,
mindestens ein an der Wischermotor-Getriebe-Einheit (4) angeordneter Befestigungsdom (10, 11) vorgesehen ist.

6. Wischeranlage nach Anspruch 5,
**dadurch gekennzeichnet,**
**dass** der Befestigungsdom (10, 11) Teil des Befestigungsfortsatzes (7) ist.

7. Wischeranlage nach einem der Ansprüche 5 oder 6, **dadurch gekennzeichnet,**
**dass** der Befestigungsdom (10, 11) eine Öffnung (12, 13) des Trägers (8) durchsetzend angeordnet ist.

## Claims

1. Wiper system with a wiper-motor/gearing unit (4) held on a support (8), in particular a tubular support, wherein the support (8) is crimped in a crimping region (9) to at least one fastening extension (7) of the wiper-motor gearing unit (4), **characterized in that** the support (8) engages laterally around the fastening extension (7) and is continued in the longitudinal direction on both sides of the fastening extension (7).

2. Wiper system according to Claim 1, **characterized in that** the support (8), at least in the crimping region (9), is shaped to be at least approximately U-shaped or V-shaped in cross section with two opposite limbs (14, 15).

3. Wiper system according to Claim 2, **characterized in that** the U shape or the V shape of the support (8) is produced by plastic deformation of the support (8).

4. Wiper system according to Claim 3, **characterized in that** the support (8) has two walls bearing against each other in the crimping region (9).

5. Wiper system according to one of the preceding claims, **characterized in that** at least one fastening dome (10, 11) arranged on the wiper-motor/gearing unit (4) is provided.

6. Wiper system according to Claim 5, **characterized in that** the fastening dome (10, 11) is part of the fastening extension (7).

7. Wiper system according to either of Claims 5 and 6, **characterized in that** the fastening dome (10, 11) is arranged passing through an opening (12, 13) in the support (8).

## Revendications

1. Installation d'essuie-glace comprenant une unité moteur d'essuie-glace-transmission (4) maintenue sur un support (8) notamment tubulaire, le support (8) étant serti sur au moins un prolongement de fixation (7) de l'unité moteur d'essuie-glace-transmission (4) dans une région de sertissage (9),
**caractérisée en ce que**
le support (8) vient en prise latéralement autour du prolongement de fixation (7) et se prolonge dans la direction longitudinale des deux côtés du prolongement de fixation (7).

2. Installation d'essuie-glace selon la revendication 1,
**caractérisée en ce que**
le support (8), au moins dans la région de sertissage (9), est formé en section transversale au moins approximativement en forme de U ou en forme de V avec deux branches (14, 15) opposées.

3. Installation d'essuie-glace selon la revendication 2,
**caractérisée en ce que**
la forme en U ou la forme en V du support (8) est réalisée par déformation plastique du support (8).

4. Installation d'essuie-glace selon la revendication 3,
**caractérisée en ce que**
le support (8) comprend deux parois qui s'appliquent l'une contre l'autre dans la région de sertissage (9).

5. Installation d'essuie-glace selon l'une quelconque des revendications précédentes,
**caractérisée en ce**
**qu'**il est prévu au moins un dôme de fixation (10, 11) disposé sur l'unité moteur d'essuie-glace-transmission (4).

6. Installation d'essuie-glace selon la revendication 5,
**caractérisée en ce que**
le dôme de fixation (10, 11) fait partie du prolongement de fixation (7).

7. Installation d'essuie-glace selon la revendication 5 ou 6,
**caractérisée en ce que**
le dôme de fixation (10, 11) est disposé de manière à traverser une ouverture (12, 13) du support (8).
